# EUROPEAN PATENT APPLICATION

(11) **EP 2 172 435 A2**
(43) Date of publication of application: **07.04.2010**
(21) Application number: 09002544.6
(22) Date of filing: 24.02.2009
(51) Int. Cl.: C04B 28/32, C04B 14/18, C04B 22/16

(54) **A composition based on foamed perlite and magnesia cement for forming constructional thermoinsulating elements, and a method of making thereof**

(30) Priority: 01.10.2008 IT MI20081749
(71) Applicant: PERLITE ITALIANA S.r.l., 20094 Corsico (MI) (IT)
(72) Inventor: Olivari, Oliviero, 20094 Corsico Milano (IT)
(74) Representative: Cicogna, Franco

(57) **Abstract**

A composition based on foamed perlite and magnesia cement for forming constructional thermo insulating elements and a method of making thereof.
The composition comprises additionally surface active substances such as methylcellulose, bentonite as swelling agent and H₃PO₄, NaH₂PO₄.2H₂O and NH₄H₂PO₄.
The made constructional articles have an even finely porous structure and can be easily machined or processed; they resist against passive flame and biologic agents, have antibacteric properties, are free of bad odours and do not emit environmental noxious substances.

## Description

### BACKGROUND OF THE INVENTION

The present invention relates to a composition for forming constructional thermoinsulating elements, and foamed perlite and magnesia cement-based elements and a method therefor.

More specifically, the invention relates to a composition and making method for making constructional elements in the form of brick, block, panel members and the like.

It is already known in the art to use foamed perlite for making thermoinsulating constructional elements having a volume mass from 300 to 1,800 kg/m³, and a compression resistance from 0.5 to 12 Mpa.

The thermal conductivity coefficient of the above product varies from 0.07 to 0.29 W/m°K.

In making the above elements, calcium sulphate, Portland cement, lime, bitumen, glass fibers and synthetic resins are conventionally used as binding materials.

Constructional elements are also known made of a perlite-ceramics, where, as a binding agents, different types of clay are conventionally used.

Further prior thermoinsulating materials are also made of perlite and phosphate mixtures.

The main drawback of prior perlite based elements or products, is the comparatively high thermal energy consume necessary for making said elements.

The above thermal treatment, in particular, is necessary for improving the mechanical properties of the finished products or elements being made.

### SUMMARY OF THE INVENTION

Accordingly, the aim of the present invention is to provide such a composition which does not require any thermal treatments for making constructional or structural elements having very high mechanical and thermoinsulating characteristics, and being based on a low density foamed perlite.

Within the scope of the above mentioned aim, a main object of the invention is to provide such a composition and method therefor allowing to make, with a small energy or power consume, constructional or structural elements having very good mechanical and thermoinsulating characteristics.

Yet another object of the invention is to provide such a composition and method allowing to produce constructional articles of manufacture having an even finely porous structure and which can be easily machined or processed.

Another object of the invention is to provide such a composition and a method therefor allowing to make constructional articles of manufacture also adapted to resist against a passive flame or fire attack, as well as against a biologic agent attack.

Yet another object of the present invention is to provide such a composition and method allowing to make constructional articles of manufacture also having antibacteric properties, which do not emit bad odours or environmentally noxious substances.

According to one aspect of the present invention, the above mentioned aim and objects, as well as yet other objects, are achieved by a composition for making thermoinsulating constructional elements made of foamed perlite and magnesia cement, or Sorrel cement, containing the hereinbelow disclosed components.

More specifically, the composition comprises a mixing substance including a magnesia (Sorrel) cement made starting from magnesium oxide MgO and an aqueous MgCl₂ solution, including MgSO₄ additives with specifically designed concentration.

Preferably, the volume amount or rate of said solution is equal to the MgO mass.

Depending on the Sorrel cement composition and amount, it is possible to produce articles of manufacture having different density and thermoinsulating and strength properties.

The composition comprises moreover foamed perlite of different particle size values: as is known, closed cell foamed perlite assures the achievement of a porosity of 30-40% in the made articles of manufacture; the amount of foamed perlite in the dry mixture varies from 5 to 80%, by weight.

Said perlite can be preliminarily processed by siliconic solutions, sodium, potassium and lithium silicates.

The subject compositions comprise moreover additive materials advantageously including surface active substances (SAS) such as methylcellulose, "Badimol" plasticizing materials and other cation-active SAS's for improving the reology of the mixture.

The inventive composition can also comprise bentonite, that is a finely ground natural product, adapted to increase reology and waterproof characteristics of the finished constructional elements.

The above mentioned properties are achieved owing to the swelling capability of bentonite in a wet condition: the amount of the above materials varying from 2 to 6% of the dry components.

Yet other additives comprise H₃PO₄, NaH₂PO₄.2H₂O and NH₄H₂PO₄, designed for improving water absorption or imbibition properties of the finished constructional elements: the amount of said other additivies varying from 2 to 6% of the dry mixture.

The inventive composition can also comprise natural alkaline-resistant pigments and artificial dyes or coloring substances, in addition to vegetable or mineral fibers, or plastic materials (PE or PP) fibers.

Moreover, said composition can also comprise mineral inert materials such as foamed clay, pumice and lapillus materials, vermiculite, zeolites and sand.

The making method according to the present invention comprises the following steps:
step 1: preparing the aqueous MgCl₂ solution, to which 5-10% MgSO₄, at a target concentration, is added;
step 2: dry metering and mixing MgO perlite and other additives in an orbiting mixer;
step 3: mixing and homogenizing in said mixer the dry compounds and solution;
step 4: forming the kneading products in plastic or metal material molds: by vibrating, pressing or glueing said products;
step 5: withdrawing after curing, the formed products from the molds and storing them.

Said method can be either manually performed or automatically carried out by specifically designed systems, having different automatizing levels.

The optimum temperature to be used in the above method varies from 15 to 30°C.

The finished products, made by the composition and method according to the present invention, have the following characteristics:
- volumetric mass: from 300 to 1,800 kg/m³
- compression strength: from 1 to 30 Mpa;
- flexural or bending strength: from 0.5 to 15 Mpa;
- thermal conductivity coefficient: from 0.085 to 0.29 W/m°K;
- porosity, very closed cavities: from 30 to 40%.

The composition and method according to the present invention provide many different and remarkable advantages.

In fact, the inventive composition and method allow to produce constructional materials and products having preset physical characteristics.

Moreover, the subject composition and method allow to mold and form standard patterns (such as blocks, panels), from the starting paste, either by using or not vibrating operations, and being also adapted to make complex geometry shapes.

The method is carried out at a temperature from 15°C to 30°C, and does not require any particular baking or thermal treatments. The curing or set process exploits the inner energy of the Sorrel cement.

The compression strength of the made products increases in time.

More specifically, the curing time of the finished products varies from 40 min to several hours, depending on the used magnesium oxide reactivity and the working environment conditions.

The raw materials herein used have broad diffusion and highly ecologic properties.

The made articles of manufacture are chemically inert, adapted to be easily machined, passively resistant to flame and biologic attacks, they do not degrade and are insensible to moulds.

Moreover, said elements do not emit bad odors and do not produce environmental noxious emissions.

Furthermore, said finished products have a white color, thereby facilitating any desired further coloring process.

Further characteristics and advantages of the invention will become more apparent from the following examples, which have been shown only by way of an indicative and not limitative manner.

### Example 1

### Constructional thermoinsulating structural blocks:

Composition: MgO 54%; foamed perlite (60 ö 180 kg/m³) 46%; aqueous MgCl₂ solution (25° Be with an addition of 5% MgSO₄) in an amount: MgO (mass) /MgCl₂ solution (volume) ratio = 1:1.

Making method: foamed perlite is mixed with MgO for 2 min; to the aqueous MgCl₂ solution, the dry mixture without interrupting the mixing operation being then added. The thus obtained paste is poured into a forming mold.

The thereby made blocks have the following physical-mechanical features:
Volumetric mass: 1,100 kg/m³
Compression strength or resistance: 8.8 M/Pa;
Thermal conductivity coefficient: λ=0.19 W/m°K

### Example 2

### Construction thermoinsulating blocks:

Composition: MgO 34%; foamed perlite (60 ö 180 kg/m³) 66%; aqueous MgCl₂ solution (25° Be with an addition of 5% MgSO₄) in an amount: MgO (mass)/MgCl₂ (volume) solution ratio = 1:1.

Making method: foamed perlite is mixed for 2 min with MgO; to the aqueous MgCl₂ solution, the dry mixture is added without interrupting the mixing operation. The thus made paste or mixed compound is introduced into a forming mold.

The made blocks have the following physical-chemical feature:
- Volumetric mass: 530 kg/m³
- Compression strength or resistance: 0.65 M/Pa;
- Thermal conductivity coefficient: λ=0.085 W/m°K

By using a compressing (pressing) making method, the compression resistance or strength of the above mentioned articles of manufacture increases by about five times. The molding pressure must be so selected as not to destroy the foamed perlite grains structure.

It has been found that the invention fully achieves the intended aim and objects.

In fact, the present invention provides a composition and a method therefor overcoming the main disadvantages of prior articles of manufacture made starting from a foamed perlite and binding agent mixture, requiring a very high energy or power consume due to the thermal processing necessary to provide the finished products with desired mechanical properties.

In particular, the composition and method of the invention allow to make, without any thermal processing, constructional elements having very good mechanical and thermoinsulating properties, by exploiting the system inner energy.

The inventive articles of manufacture have an even finely porous construction and can be easily machined, and, moreover, they resist against a passive flame and biologic agent attack.

Moreover, the inventive articles of manufacture have very good antibacteric properties, do not release bad odours or environmentally noxious substances.

In practicing the invention, the used materials, as well as the contingent size and shapes, can be any, according to requirements.

## Claims

1. A composition for forming constructional thermoinsulating elements, and thermoinsulating elements made of a foamed perlite and magnesia cement material, **characterized in that** said composition comprises: magnesium oxide, granulated foamed perlite, an aqueous solution of MgCl₂; additives selected from H₃PO₄, NaH₂PO₄.2H₂O and NH₄H₂PO₄; active surface agents (SAS) selected from methylcellulose, "Badimol", "0-77" plasticizer; H₃PO₄, NaH₂PO₄.2H₂O and NH₄H₂PO₄; natural and artificial pigments; bentonite of natural particle size.

2. A composition according to claim 1, **characterized in that** said composition comprises:
- a magnesium oxide in a rate from 20 to 60% by mass;
- a foamed granulated perlite (0.01 ö 8 mm) in a rate from 5 to 80% by weight;
- an aqueous MgCl₂ solution, having a concentration of 18 ö 32° Be, in such an amount providing a MgO / MgCl₂ ratio from 6:1 to 1.8:1;
- additive materials comprising an insertion of MgSO₄ in said aqueous solution comprising from 5 to 10% H₃PO₄, NaH₂PO₄.2H₂O and NH₄H₂PO₄, enhancing a wetting resistance of said structural finished elements: with a dry amount of said components from 2 to 6%;
- surface active agents (SAS) (methyl-cellulose, "Badimol", plasticizer "0-77") to enhance the logic properties of said mixture in an amount from 0.1 to 0.2% of the mixture;
- H₃PO₄, NaH₂PO₄.2H₂O and NH₄H₂PO₄ improving the wetting resistance of said structural finished components in an amount from 2 to 6% of the dry compounds;
- pigments, either natural or artificial such as TiO₂, Cr₂O₃, αFe₂O₃, Fe(OH)₃ and so on, in an amount from 0.5 to 10% of said mixture;
- bentonite in a natural particle size in an amount from 2 to 6% of the dry mixture.

3. A method for making constructional thermoinsulating elements, and the made thermoinsulating elements, obtained from foamed perlite and magnesia cement, **characterized in that** said method comprises the steps of:
- preparing an aqueous MgCl₂ solution with a specifically designed concentration, either with or without an insertion of surface active agents;
- metering and mixing in an orbital mixing magnesium oxide, perlite and optional other dry substances;
- mixing and homogenizing the dry and liquid components in a mixer, to provide a homogeneous paste;
- forming said construction elements in metal or plastic prelubricated molds, by casting, injection or pressing;
- removing the formed elements from their molds and subjecting them to an optional finishing process.

4. A method according to claim 3, **characterized in that** the making is either manual or by suitably designed systems, with different automizing levels.

5. A method according to claim 3, **characterized in that** an optimum temperature for the making method is included in the 15 to 30°C range.

6. A constructional element, made by a method according to claim 3, or by a composition according to claim 1, **characterized in that** said constructional element has the following characteristics:
- a volume mass from 300 to 1800 kg/m³;
- a pressure resistance from 1 to 30 MPa;
- a flexure resistance from 0.5 to 15 MPa;
- a thermal conductivity coefficient from 0.085 to 0.29 W/m°K;
- a porosity with perfectly closed pores from 30 to 40%.
